# EUROPEAN PATENT APPLICATION

(11) **EP 4 005 402 A1**
(43) Date of publication of application: **01.06.2022**
(21) Application number: 20844067.7
(22) Date of filing: 27.05.2020
(51) Int. Cl.: A23L 15/00

(54) **EGG-BASED LIQUID MIXTURE WITH LOW CHOLESTEROL CONTENT**

(30) Priority: 22.07.2019 ES 201931254 U
(71) Applicant: Alvarez Camacho, S.L., 41620 Marchena (ES)
(72) Inventor: ALVAREZ SANCHEZ, Antonio Luis, 41620 MARCHENA (ES)
(74) Representative: Isern Patentes y Marcas S.L.
(86) International application number: PCT/ES2020/070349
(87) International publication number: WO 2021/014034

(57) **Abstract**

The present invention relates to an egg-based liquid mixture which comprises egg white and egg yolk, wherein the total cholesterol content is reduced by at least 50% with respect to the total cholesterol content of a natural egg and the caloric content is reduced by at least 40% with respect to the caloric content of a natural egg.

## Description

### Field of the invention

The present invention falls within the general field of food products and, in particular, it relates to an egg-based liquid mixture, which comprises a low cholesterol content.

### State of the art

In recent years, society has undergone a change in habits, such that the trend leans towards a faster pace of life, where time is an essential element, and a healthier life, where caring for both the body and one's nutrition have become very important aspects for the vast majority of people.

In this sense, in the field of food different prepared products arise, which are an essential alternative to help with meal preparation both at an individual level and at the hospitality level.

Eggs are one of the most used foods in the kitchen, either as food itself or mixed with other foods. However, despite being a food that is natural, inexpensive and with a high nutrient content, eggs have a series of drawbacks that cause this product to be less consumed than it should. This is because they contain a high cholesterol content and, on the other hand, they are a highly perishable product and one of the main spreaders of diseases such as salmonellosis.

Pasteurised eggs are one of the most used products in hospitality to avoid problems of food poisoning; however, despite avoiding the problems associated with food poisoning, they have a high cholesterol content.

Pasteurised egg whites are another widely used product, especially at an individual level; this product is an egg white-based preparation, rich in protein and with no cholesterol, however, since they are only egg whites, they do not have the nutritional properties of eggs.

There is therefore a need to provide an egg-based product that can be easily used and that has all the properties of a natural egg, but with a lower cholesterol content and a lower caloric intake content.

### Brief description of the invention

The present invention solves the problems described in the state of the art since it provides an egg-based product with egg yolk and egg white, with a lower caloric intake and with a lower cholesterol content than a natural egg.

Thus, in a first aspect, the present invention relates to an egg-based liquid mixture (hereinafter mixture of the invention) which comprises egg white and egg yolk, wherein the total cholesterol content is reduced by at least 50% with respect to the total cholesterol content of a natural egg and the caloric intake is reduced by at least 40% with respect to the caloric content of a natural egg.

In the present invention egg-based liquid mixture relates to a mixture comprising egg yolks and egg whites.

In a particular aspect, the mixture of the present invention comprises a ratio of egg yolk:egg white comprised between 8:92-20:80, preferably the ratio of egg yolk:egg white is comprised between 10:90-16:84.

In a particular aspect, the total cholesterol of the mixture of the present invention is reduced by at least 70% with respect to the total cholesterol content of a natural egg.

In a particular aspect, the caloric content of the mixture of the present invention is reduced by at least 45% with respect to the caloric content of a natural egg.

In another particular aspect, the mixture of the present invention comprises additives.

More particularly, the mixture of the present invention comprises additives of natural origin.

More particularly, the additives of the mixture of the present invention are additives selected from among dyes, preservatives, stabilisers, thickeners, antioxidants, acidulants, sweeteners, vitamins, minerals and mixtures thereof.

More particularly, the additives of the mixture of the present invention are plant extracts. More particularly, the plant extract is selected from among orange, pumpkin, carrot, chicory, turmeric, beet, pepper and mixtures thereof.

More particularly, the mixture of the present invention is pasteurised.

### Detailed description

### Example 1: Preparation of the egg white and egg yolk mixture with a 50% reduction in the cholesterol content with respect to natural egg.

To prepare the mixture of the present invention, firstly, the eggs were selected; a sample was taken to know their physico-chemical composition and determine the ratio of number of egg yolks:number of egg whites that the sample should have contained so that the mixture of the present invention had 50% less cholesterol content than normal eggs; the egg yolks and egg whites were mixed in a ratio of 8:92-20:80.

To prepare 200 kg of mixture, the eggs were taken to the egg breaker and separator machines, which enabled the egg yolks to be separated from the egg whites. Next, the egg yolks were mixed with the egg whites in a ratio of 16:84 and between 0.15 and 0.4% by weight of natural carrot and pumpkin extract was added.

Lastly, the mixture was homogenised in a homogenisation tank, and it subsequently was pasteurised at a temperature comprised between 60 °C and 65 °C for 4.5 to 6.5 minutes.

### Example 2: Preparation of the egg white and egg yolk mixture with a 70% reduction in the cholesterol content with respect to natural egg.

The mixture of the present invention was prepared in the same way as in the previous example, but the ratio of egg yolk:egg white was 10:90.

### Example 3: Comparison of nutrients and cholesterol content of the mixture of the present invention, natural egg, egg product with egg white only and egg product with egg yolk only.

For the comparison between the nutrients and cholesterol content of the mixture of the present invention, obtained as indicated in example 2, with natural egg, egg yolk-based egg product and egg white-based egg product, a sample of each of the products was taken and each of the nutrients was measured (Protein - Kjeldahl Method, Moisture - Drying oven, Fat - Volumetric determination using a butyrometer, Ash - Muffle furnace, Carbohydrates - Fehling Reaction Test, Glucose - Chromatography, Calories - Calorimeter, Cholesterol - Liebermann-Burchard Spectrophotometry). Table 1 shows the comparison of nutrients, Table 2 shows the comparison of vitamins and Table 3 shows the comparison of minerals.

**Table 1: comparison of nutrients**

| | | **EGG** | **EGG YOLK** | **EGG WHITE** | **MIXTURE OF EXAMPLE 2** |
|---|---|---|---|---|---|
| **NUTRIENTS** | x100 | REFERENCE | REFERENCE | REFERENCE | REFERENCE |
| Protein | g | 12.560 | 15.860 | 10.900 | 11.398 |
| Moisture | g | 76.150 | 52.310 | 87.570 | 84.144 |
| Fat | g | 9.750 | 26.540 | 0.170 | 3.044 |
| Ash | g | 1.060 | 1.710 | 0.630 | 0.759 |
| Carbohydrates | g | 0.720 | 3.590 | 0.730 | 0.727 |
| Glucose | g | 0.100 | 0.200 | 0.300 | 0.240 |
| Calories | Kcal | 143.000 | 322.000 | 52.000 | 79.300 |
| Cholesterol | mg | 372.000 | 1085.000 | 0.000 | 111.600 |

The results showed that the mixture of the present invention had a 70% reduction in cholesterol content compared to natural egg.

**Table 2: comparison of vitamins**

| | | **EGG** | **EGG YOLK** | **EGG WHITE** | **PREPARATION** |
|---|---|---|---|---|---|
| **VITAMINS** | | REFERENCE | REFERENCE | REFERENCE | REFERENCE |
| Niacin | mg | 0.075 | 0.024 | 0.105 | 0.096 |
| Riboflavin | mg | 0.457 | 0.528 | 0.439 | 0.444 |
| B12 | mcg | 0.890 | 1.950 | 0.090 | 0.330 |
| Pantothenic Acid | mg | 1.533 | 2.990 | 0.190 | 0.593 |
| Vitamin A | IU | 540.000 | 1442.000 | 0.000 | 162.000 |
| Thiamine | mg | 0.040 | 0.176 | 0.004 | 0.015 |
| Pyridoxine | mg | 0.170 | 0.350 | 0.005 | 0.055 |
| Folate | mcg | 47.000 | 146.000 | 4.000 | 16.900 |
| Vitamin E | mg | 1050.00 | 2580.00 | 0.00 | 315.00 |
| Vitamin D | IU | 82.00 | 218.00 | 0.00 | 24.60 |
| Lutein+zeaxanthin | mcg | 503.000 | 1094.000 | 0.000 | 150.900 |

**Table 3: comparison of minerals**

| | | **EGG** | **EGG YOLK** | **EGG WHITE** | **PREPARATION** |
|---|---|---|---|---|---|
| **MINERALS** | | REFERENCE | REFERENCE | REFERENCE | REFERENCE |
| Calcium | mg | 56.000 | 129.000 | 7.000 | 21.700 |
| Iron | mg | 1.750 | 2.730 | 0.080 | 0.581 |
| Magnesium | mg | 12.000 | 5.000 | 11.000 | 11.300 |
| Phosphorus | mg | 198.000 | 390.000 | 15.000 | 69.900 |
| Potassium | mg | 138.000 | 109.000 | 163.000 | 155.500 |
| Sodium | mg | 142.000 | 48.000 | 166.000 | 158.800 |
| Zinc | mg | 129.000 | 2.300 | 0.030 | 38.721 |
| Copper | mg | 0.072 | 0.077 | 0.023 | 0.038 |
| Manganese | mg | 0.03 | 0.06 | 0.01 | 0.02 |
| Selenium | mg | 30.70 | 56.00 | 20.00 | 23.21 |

## Claims

1. An egg-based liquid mixture which comprises egg white and egg yolk, **characterised in that** the total cholesterol content is reduced by at least 50% with respect to the total cholesterol content of a natural egg and the caloric content is reduced by at least 40% with respect to the caloric content of a natural egg.

2. The mixture according to claim 1, wherein the total cholesterol is reduced by at least 70% with respect to the total cholesterol content of a natural egg.

3. The mixture according to any of the preceding claims, wherein the ratio of egg yolk:egg white is comprised between 8:92-20:80.

4. The mixture according to any of the preceding claims, comprising additives.

5. The mixture according to any of the preceding claims, comprising additives of natural origin.

6. The mixture according to any of claims 4-5, wherein the additives are selected from among dyes, preservatives, stabilisers, thickeners, antioxidants, acidulants, sweeteners, vitamins, minerals and mixtures thereof.

7. The mixture according to any of claims 4-6, wherein the additive is a plant extract.

8. The mixture according to claim 7, wherein the plant extract is selected from among orange, pumpkin, carrot, chicory, turmeric, beet, pepper and mixtures thereof.

9. The mixture according to any of the preceding claims, wherein the mixture is pasteurised.
